# EUROPEAN PATENT APPLICATION

(11) **EP 4 563 540 A1**
(43) Date of publication of application: **04.06.2025**
(21) Application number: 23846459.8
(22) Date of filing: 24.07.2023
(51) Int. Cl.: C03B 37/014

(54) **PREFORM FOR OPTICAL FIBERS, METHOD FOR MEASURING REFRACTIVE INDEX PROFILE OF PREFORM FOR OPTICAL FIBERS, AND METHOD FOR PRODUCING PREFORM FOR OPTICAL FIBERS**

(30) Priority: 26.07.2022 JP 2022118756
(71) Applicant: Fujikura Ltd., Tokyo 135-8512 (JP)
(72) Inventor: TAKAHASHI, Junichi, Sakura-shi, Chiba 285-8550 (JP)
(74) Representative: Hoffmann Eitle
(86) International application number: PCT/JP2023/027018
(87) International publication number: WO 2024/024729

(57) **Abstract**

An optical fiber preform (1P) has a refractive index profile including a fluctuation region in which a fluctuation (20) of a refractive index is repeated, the fluctuation being repeating increase and decrease of the refractive index, wherein, and at least a part of the fluctuation region is included in an outer region (OR) located with a distance (L) of equal to or greater than 7 mm from a center of the optical fiber preform (1P), and a width (20W) of the fluctuation 20 in a radial direction in the outer region (OR) is less than 2 µm.

## Description

### Technical Field

The present invention relates to an optical fiber preform, a method for measuring a refractive index profile of the optical fiber preform, and a method for producing the optical fiber preform.

### Background Art

As a method for producing an optical fiber preform used for producing optical fibers, a method is known in which glass fine particles are deposited in multiple layers on a glass rod rotating around an axis using an outside vapor deposition method (OVD method), a vapor phase axial deposition method (VAD method), or the like to form a porous glass body, and the porous glass body is sintered.

A refractive index profile of the optical fiber preform thus obtained may be measured using a preform analyzer. The preform analyzer measures the refractive index profile of the optical fiber preform by causing laser beam to enter from a direction perpendicular to the longitudinal direction of the optical fiber preform and performing scanning in the radial direction to measure a refractive angle of the laser beam emitted from the optical fiber preform.

As described above, the optical fiber preform is obtained by sintering a porous glass body in which glass fine particles are deposited in multiple layers. For this reason, a glass layer corresponding to each layer of the glass fine particles is formed in the optical fiber preform, fine fluctuations in refractive indexes corresponding to these glass layers occur in the refractive index profile of the optical fiber preform, and the refractive index profile has a distribution in which fluctuations in which the refractive index increases and decreases are repeated. This is considered to be caused by a change in a concentration of a dopant for adjusting a bulk density in a layer of glass fine particles to be a glass layer and a refractive index contained in the layer. Such a fluctuation in refractive indexes may be referred to as striae. The laser beam of the preform analyzer may be diffracted or the like by the striae, and in this case, a refraction angle of the laser beam cannot be accurately measured, and the measured refractive index profile is disturbed.

Patent Literature 1 discloses that glass fine particles are deposited while the rotational speed of a glass rod is changed between a set value of two or more values. In the producing method of Patent Literature 1, the thickness of the layer of glass fine particles in the porous glass body becomes random, and as a result, the width of each layer constituting striae becomes random, and diffraction of the laser beam by the preform analyzer can be prevented. Therefore, according to the producing method of Patent Literature 1, the refractive index profile of the optical fiber preform can be measured.

[Patent Literature 1] JP 2013-56794 A

### Summary of Invention

However, as in Patent Literature 1, it has been found that there is a case where the refractive index profile of the optical fiber preform cannot be measured even if the glass fine particles are deposited while the rotational speed of the glass rod is changed between a set value of two or more values.

Therefore, an object of the present invention is to provide an optical fiber preform, a method of measuring a refractive index profile of the optical fiber preform, and a method of producing the optical fiber preform, which can prevent a preform analyzer from being incapable of measuring a refractive index profile.

A first aspect of the present invention is an optical fiber preform having a refractive index profile including a fluctuation region in which a fluctuation of a refractive index is repeated, the fluctuation being repeating increase and decrease of the refractive index, wherein at least a part of the fluctuation region is included in an outer region located with a distance of equal to or greater than 7 mm from a center of the optical fiber preform, and a width of the fluctuation in a radial direction in the outer region is less than 2 µm.

The present inventor has studied an optical fiber preform whose refractive index profile cannot be measured by a preform analyzer. As a result, it was found that as the distance from the center of the optical fiber preform is longer, it is more difficult to accurately measure the refraction angle of the laser beam, and as the distance is shorter, it is easier to accurately measure the refraction angle of the laser beam. In addition, it has been found that when the distance is long, it is easy to accurately measure the refraction angle of the laser beam if a width of fluctuation in which the refractive index increases or decreases is narrow. The width of fluctuation in which the refractive index increases or decreases can also be said to be the width of each layer constituting striae. Therefore, as a result of further intensive studies, the present inventor has found that, in a case where the width of fluctuation in the outer region where the distance from the center of the optical fiber preform is equal to or greater than 7 mm in the refractive index profile is less than 2 µm, the refractive index profile can be measured by a preform analyzer. Therefore, according to the first aspect, it is possible to prevent the preform analyzer from being incapable of measuring the refractive index profile.

A second aspect of the present invention is the optical fiber preform according to the first aspect, wherein the width of the fluctuation in the radial direction in the outer region as a whole is less than 2 µm.

A third aspect of the present invention is the optical fiber preform according to the first aspect or the second aspect, wherein the width of the fluctuation increases toward the center.

In the refractive index profile of the optical fiber preform obtained by sintering the porous glass body formed using the VAD method, the width of fluctuation increases toward the center side. Therefore, the second aspect of the present invention is suitable for the optical fiber preform produced in this way.

A fourth aspect of the present invention is the optical fiber preform according to any one of the first to third aspects, wherein an inner region located with a distance of less than 7 mm from the center includes a region where the width of the fluctuation is equal to or greater than 2 µm.

A fifth aspect of the present invention is the optical fiber preform according to any one of the first to fourth aspects including: a core glass body having a rod shape; and a clad glass body surrounding an outer peripheral surface of the core glass body, the clad glass body having a refractive index different from a refractive index of the core glass body, wherein the core glass body is located only in an inner region located with a distance of less than 7 mm from the center.

In the fifth aspect of the present invention, an increase in the width of fluctuation in the core glass body is allowed. Therefore, according to the fifth aspect of the present invention, it is possible to realize an optical fiber preform including a core glass body having a high degree of freedom in the width of fluctuation.

A sixth aspect of the present invention is a method for measuring a refractive index profile of an optical fiber preform, the method including: moving the optical fiber preform and a light emitting unit emitting a laser beam relatively in one of a direction toward a center of the optical fiber preform and a direction away from the center of the optical fiber preform such that the laser beam enters the optical fiber preform from a direction perpendicular to a longitudinal direction of the optical fiber preform; causing the laser beam to scan the optical fiber preform; and measuring a refractive index profile of the optical fiber preform based on a refractive angle of the laser beam emitted from the optical fiber preform, wherein the optical fiber preform is the optical fiber preform according to any one of the first to fifth aspects, and a diameter of the laser beam when the laser beam enters the optical fiber preform is equal to or greater than 20 µm and equal to or less than 40 µm.

According to the sixth aspect of the present invention, the refractive index profile of the optical fiber preform according to any one of the first to fifth aspects can be measured.

A seventh aspect of the present invention is a method for producing an optical fiber preform, the method including: a glass member formation step of forming a porous glass body by depositing glass fine particles in multiple layers on a glass rod rotating around an axis, sintering the porous glass body, and forming a rod-shaped glass member having a fluctuation region in which a fluctuation of a refractive index is repeated, the fluctuation being repeating increase and decrease of the refractive index; and a stretch step of stretching the glass member, wherein a rotational speed of the glass rod in the glass member formation step and a stretch ratio of the glass member in the stretch step are set such that at least a part of the fluctuation region in the refractive index profile of the glass member after the stretch step is included in an outer region located with a distance of equal to or greater than 7 mm from a center of the glass member, and a width of the fluctuation in a radial direction in the outer region is less than 2 µm.

When the rotational speed of the glass rod in the glass member formation step increases, the thickness of each layer of the glass fine particles in the porous glass body decreases, and the width of fluctuation in the refractive index profile of the obtained glass member decreases. In addition, when the stretch ratio of the glass member in the stretch step increases, the width of fluctuation in the refractive index profile of the glass member after stretching decreases. In the seventh aspect, as described above, the rotational speed of the glass rod and the stretch ratio of the glass member are set such that at least a part of the fluctuation region in the refractive index profile of the glass member after stretching is included in the outer region where the distance from the center of the glass member is equal to or greater than 7 mm, and the width of fluctuation in the radial direction in the outer region is less than 2 µm. Therefore, according to the seventh aspect, it is possible to produce an optical fiber preform in which the width of fluctuation is less than 2 µm in the outer region where the distance from the center is equal to or greater than 7 mm, and it is possible to produce an optical fiber preform which can prevent a preform analyzer from being incapable of measuring a refractive index profile.

An eighth aspect of the present invention is the method for producing an optical fiber preform according to the seventh aspect, wherein the rotational speed of the glass rod is equal to or greater than 20 rpm and equal to or less than 40 rpm.

According to the eighth aspect of the present invention, it is possible to easily produce an optical fiber preform in which the width of fluctuation in the outer region is less than 2 µm.

A ninth aspect of the present invention is the method for producing the optical fiber preform according to the seventh or the eighth aspect, wherein the stretch ratio is set such that the width of the fluctuation in a radial direction in the outer region as a whole is less than 2 µm.

As described above, according to the present invention, an optical fiber preform which can prevent a preform analyzer from being incapable of measuring a refractive index profile, and a method for producing the optical fiber preform are provided.

### Brief Description of Drawings

[FIG. 1] FIG. 1 is a diagram schematically illustrating a state of a cross section perpendicular to a longitudinal direction of an optical fiber preform according to an embodiment of the present invention.
[FIG. 2] FIG. 2 is a diagram schematically illustrating a refractive index profile in a cross section perpendicular to the longitudinal direction of the optical fiber preform illustrated in FIG. 1.
[FIG. 3] FIG. 3 is a conceptual diagram illustrating a part of the refractive index profile illustrated in FIG. 2 in an enlarged manner.
[FIG. 4] FIG. 4 is a flowchart illustrating steps of a method for producing the optical fiber preform according to the embodiment.
[FIG. 5] FIG. 5 is a diagram schematically illustrating a preform analyzer according to the embodiment.
[FIG. 6] FIG. 6 is a graph showing a relationship between a distance from the center of the optical fiber preform and a width of fluctuation in the refractive index profile in Examples 1 to 3 and Comparative Examples 1 to 3.

### Description of Embodiments

Hereinafter, an optical fiber preform and a method for producing the optical fiber preform according to the present invention will be exemplified together with the accompanying drawings. The embodiment exemplified below is intended to facilitate understanding of the present invention and are not intended to limit the present invention. The present invention can be modified and improved without departing from the gist of the present invention. In the drawings referred to below, dimensions of each member may be changed for easy understanding.

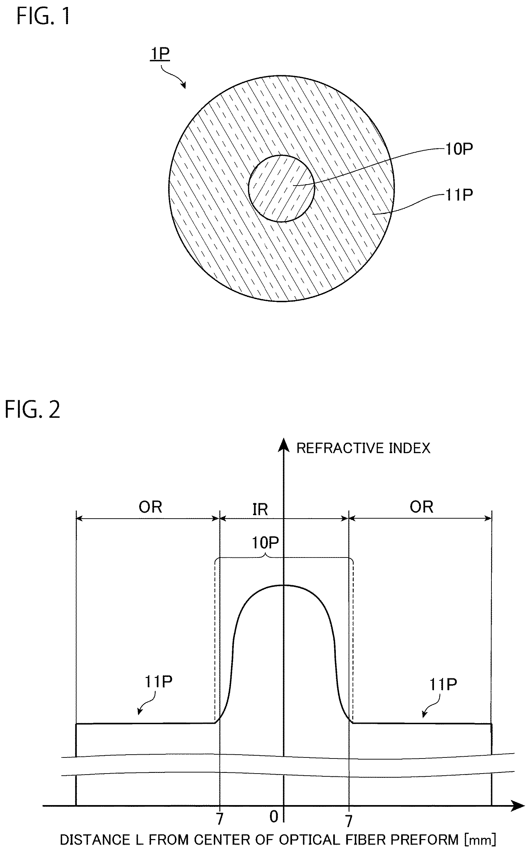

FIG. 1 is a diagram schematically illustrating a state of a cross section perpendicular to a longitudinal direction of the optical fiber preform according to an embodiment of the present invention. As illustrated in FIG. 1, an optical fiber preform 1P according to the present embodiment mainly includes a rod-shaped core glass body 10P and a clad glass body 11P surrounding an outer peripheral surface of the core glass body 10P. The core glass body 10P is a member to be a core in an optical fiber obtained from the optical fiber preform 1P, and the clad glass body 11P is a member to be a clad in the optical fiber obtained from the optical fiber preform 1P. In the present embodiment, an outer shape of the core glass body 10P and an outer shape of the clad glass body 11P in cross section are substantially circular, and the core glass body 10P is disposed at the center of the clad glass body 11P. Further, an outer diameter of the core glass body 10P is 15 mm, and an outer diameter of the clad glass body 11P is 50 mm, but the outer diameters are not limited thereto.

FIG. 2 is a diagram schematically illustrating a refractive index profile in a cross section perpendicular to a longitudinal direction of the optical fiber preform 1P illustrated in FIG. 1, and a refractive index of the core glass body 10P is higher than a refractive index of the clad glass body 11P. In the present embodiment, the core glass body 10P is made of silica glass to which a dopant such as germanium (Ge) having a high refractive index is added, and the clad glass body 11P is made of silica glass without any additive. The core glass body 10P may be made of silica glass without an additive, and the clad glass body 11P may be made of silica glass to which a dopant such as fluorine (F) having a low refractive index is added. In addition, the core glass body 10P may be made of silica glass to which a dopant for increasing the refractive index is added, and the clad glass body 11P may be made of silica glass to which a dopant for decreasing the refractive index is added. In addition, the dopant for increasing the refractive index and the dopant for decreasing the refractive index are not limited.

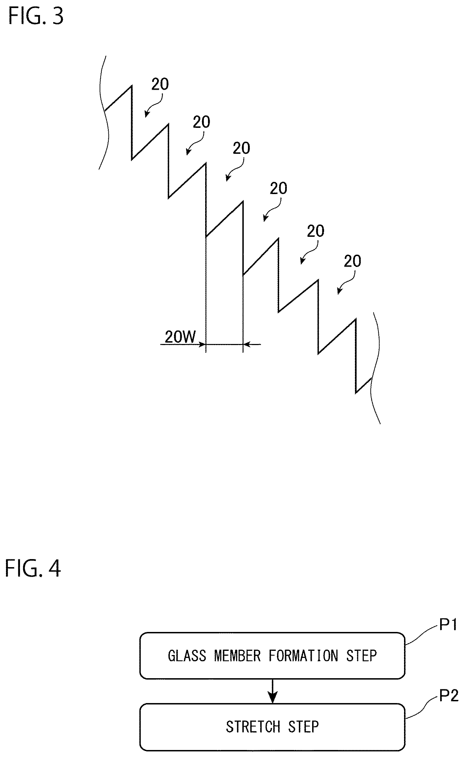

FIG. 3 is a conceptual diagram showing a part of the refractive index profile shown in FIG. 2 in an enlarged manner, and is a conceptual diagram showing the refractive index profile of a part of the core glass body 10P in an enlarged manner. As illustrated in FIG. 3, the refractive index profile of the optical fiber preform 1P is a distribution including a fluctuation region in which a fluctuation 20 in which the refractive index increases and decreases is repeated. That is, in the fluctuation region, an increase region where the refractive index increases and a decrease region where the refractive index decreases are alternately arranged. An increase amount and a decrease amount of the refractive index in the fluctuation 20 are, for example, approximately equal to or less than 0.04% when the refractive index profile is represented by the relative refractive index. A width 20W of the fluctuation 20 in a radial direction is, for example, about 0.3 mm to 0.3 µm. Note that the width 20W of the fluctuation 20 may be referred to as a width of striae or a cycle of striae, and may also be referred to as a repetition width of the fluctuation 20 or a width of each layer constituting striae. Although details will be described later, the optical fiber preform 1P is obtained by sintering a porous glass body in which glass fine particles are deposited in multiple layers. For this reason, the glass layer corresponding to each layer of the glass fine particles is formed in the optical fiber preform 1P, fine fluctuations in refractive indexes corresponding to these glass layers occur in the refractive index profile of the optical fiber preform 1P, and as a result, the refractive index profile includes a fluctuation region in which the fluctuation 20 is repeated. In the present embodiment, an entire refractive index profile of the optical fiber preform 1P is the fluctuation region. In addition, the width 20W of the fluctuation 20 in the radial direction in an outer region OR in which a distance L from the center of the optical fiber preform 1P is equal to or greater than 7 mm is less than 2 µm, and the width 20W of the fluctuation 20 increases toward the center of the optical fiber preform 1P. In the present embodiment, the width 20W of the fluctuation 20 in the radial direction in the entire region of the outer region OR is less than 2 µm. Further, in the present embodiment, an inner region IR in which the distance L is less than 7 mm includes a region in which the width 20W of the fluctuation 20 is equal to or greater than 2 µm, but the inner region IR may not include a region in which the width 20W of the fluctuation 20 is equal to or greater than 2 µm. In the present embodiment, a part of the core glass body 10P is located in the outer region OR, but the core glass body 10P may not be located in the outer region OR. That is, the core glass body 10P may be located only in the inner region IR.

Next, a method for producing the optical fiber preform according to the present embodiment will be described.

FIG. 4 is a flowchart illustrating steps of the method for producing the optical fiber preform 1P according to the present embodiment. As illustrated in FIG. 4, the method for producing the optical fiber preform 1P according to the present embodiment includes a glass member formation step P1 and a stretch step P2.

### <Glass member formation step P1>

This step is a step of forming a porous glass body by depositing glass fine particles in multiple layers on a glass rod rotating around an axis, and sintering the porous glass body to form a rod-shaped glass member. Although illustration is omitted, in the present embodiment, a porous glass body is formed by the VAD method in which glass fine particles are deposited in multiple layers in the axial direction of the glass rod from one end of the glass rod rotating around the axis. The porous glass body is sintered and a rod-shaped glass member is formed. The glass member formed in this manner has a configuration in which the optical fiber preform 1P illustrated in FIG. 1 is enlarged in the radial direction and reduced in the longitudinal direction. Therefore, the glass member is entangled with the core glass body 10P and the clad glass body 11P, and a ratio of the outer diameter of the core glass body 10P to the outer diameter of the clad glass body 11P in the glass member is substantially the same as the ratio in the optical fiber preform 1P. The refractive index profile of the glass member is a distribution in which the refractive index profile of the optical fiber preform 1P illustrated in FIG. 2 is extended in the radial direction. That is, in order to form such a glass member, glass fine particles are deposited in multiple layers to form a porous glass body, and the porous glass body is sintered. In the present embodiment, the rotational speed of the glass rod is constant, but the rotational speed of the glass rod may be changed when the glass fine particles are deposited. In addition, the method of depositing the glass fine particles is not limited, and may be, for example, the OVD method of depositing glass fine particles in multiple layers on the outer peripheral surface of the glass rod rotating around the axis.

### <Stretch step P2>

This step is a step of heating the glass member formed in the glass member formation step P1 and stretching the glass member in the longitudinal direction. As described above, the glass member formed in the glass member formation step P1 has a configuration in which the optical fiber preform 1P illustrated in FIG. 1 is enlarged in the radial direction and reduced in the longitudinal direction. Therefore, the glass member becomes the optical fiber preform 1P by stretching the glass member in the longitudinal direction.

In the meantime, when the rotational speed of the glass rod in the glass member formation step P1 increases, the thickness of each layer of the glass fine particles in the porous glass body decreases, and the width 20W of the fluctuation 20 in the refractive index profile of the obtained glass member decreases. In addition, when the stretch ratio of the glass member in the stretch step P2 increases, the width 20W of the fluctuation 20 in the refractive index profile of the glass member after extension decreases. The stretch ratio is a ratio of a length of the glass member after stretching to a length of the glass member before stretching. In the present embodiment, the rotational speed of the glass rod in the glass member formation step P1 and the stretch ratio of the glass member in the stretch step P2 are set such that at least a part of the fluctuation region in the refractive index profile of the glass member after stretching is included in the outer region OR where the distance from the center of the glass member is equal to or greater than 7 mm, and the width 20W of the fluctuation 20 in the outer region OR is less than 2 µm. Therefore, the refractive index profile of the obtained optical fiber preform 1P includes a fluctuation region in which the fluctuation 20 in which the refractive index increases and decreases is repeated. At least a part of the fluctuation region is included in the outer region OR in which the distance L from the center of the optical fiber preform 1P is equal to or greater than 7 mm, and the width of the fluctuation 20 in the radial direction in the outer region OR is less than 2 µm.

The rotational speed of the glass rod in the glass member formation step P1 is preferably equal to or greater than 20 rpm and equal to or less than 40 rpm. According to such a configuration, it is possible to easily produce the optical fiber preform 1P in which the width of the fluctuation 20 in the outer region OR is less than 2 µm.

Next, a preform analyzer for measuring the refractive distribution of the optical fiber preform according to the present embodiment will be described.

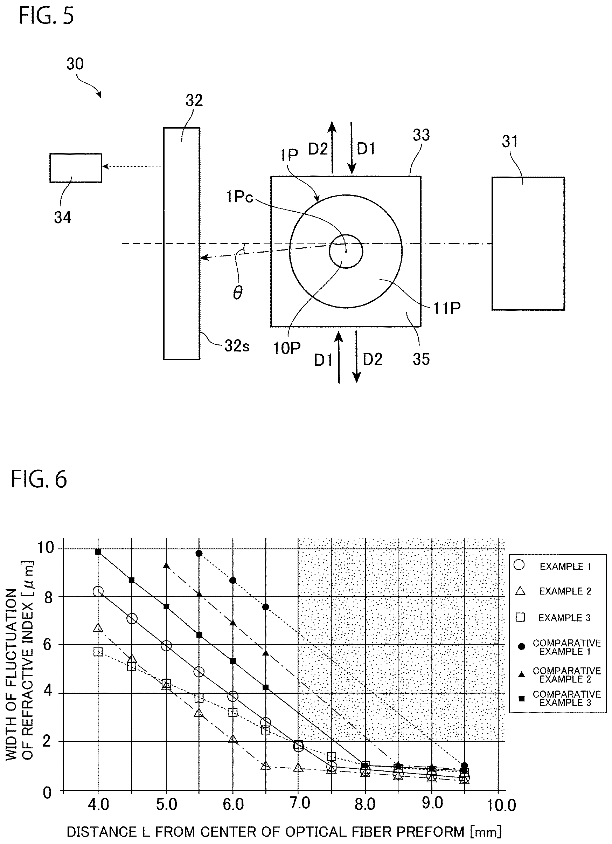

FIG. 5 is a diagram schematically illustrating the preform analyzer according to the present embodiment. As illustrated in FIG. 5, in the present embodiment, a preform analyzer 30 mainly includes a light emitting unit 31 that emits light, a light receiving unit 32 that receives light, a light-transmissive accommodation unit 33 having an accommodating space, and a measurement unit 34.

The light emitting unit 31 of the present embodiment emits a laser beam having a peak wavelength of power of 632 nm, but the peak wavelength of the power of the laser beam is not limited.

The light receiving unit 32 is an optical element that converts light received by the light receiving surface 32s into an electrical signal and outputs the electrical signal. In the present embodiment, the light receiving surface 32s includes light receiving surfaces of a plurality of light receiving elements that receive light, and the light receiving unit 32 outputs information related to a position of light emitted to the light receiving surface 32s to the measurement unit 34. Examples of the information regarding the position of light include a two-dimensional image. The light emitting unit 31 and the light receiving unit 32 are disposed such that a portion of the light emitting unit 31 emitting light and the light receiving surface 32s of the light receiving unit 32 face each other with a space interposed therebetween.

The accommodation unit 33 is disposed between the light emitting unit 31 and the light receiving unit 32. The optical fiber preform 1P is accommodated in the accommodation space of the accommodation unit 33 such that the longitudinal direction of the optical fiber preform 1P is perpendicular to the direction in which the light emitting unit 31 and the light receiving unit 32 face each other, and the accommodation space is filled with matching oil 35 having the same refractive index as the clad glass body 11P. The accommodation unit 33 is movable in a predetermined direction perpendicular to the longitudinal direction of the optical fiber preform 1P and perpendicular to the direction in which the light emitting unit 31 and the light receiving unit 32 face each other.

A laser beam emitted from the light emitting unit 31 passes through the optical fiber preform 1P and is applied to the light receiving surface 32s of the light receiving unit 32. In the present embodiment, a diameter of the laser beam when entering the optical fiber preform 1P is, for example, equal to or greater than 20 µm and equal to or less than 40 µm, and is 30 µm in the present embodiment. In the present embodiment, the laser beam is scanned by moving the accommodation unit 33 in a predetermined direction. The predetermined direction is, for example, a direction perpendicular to an incident direction of the laser beam on the optical fiber preform 1P and the longitudinal direction of the optical fiber preform 1P. In this case, the laser beam is incident on the optical fiber preform 1P accommodated in the accommodation unit 33 from a direction perpendicular to the longitudinal direction of the optical fiber preform 1P. In addition, the optical fiber preform 1P moves with respect to the light emitting unit 31 to a direction D1 toward a center 1Pc of the optical fiber preform 1P or to a direction D2 away from the center 1Pc of the optical fiber preform 1P, and the laser beam is scanned. Note that the optical fiber preform 1P and the light emitting unit 31 may be relatively moved to the direction D1 toward the center 1Pc of the optical fiber preform 1P or to the direction D2 away from the center 1Pc of the optical fiber preform 1P to scan the laser beam so that the laser beam enters the optical fiber preform 1P from the direction perpendicular to the longitudinal direction of the optical fiber preform 1P. For example, the light emitting unit 31 may move in the predetermined direction, the optical fiber preform 1P may move in the predetermined direction, or the optical fiber preform 1P and the light emitting unit 31 may move in the predetermined direction. In addition, the perpendicular described above includes not only a case where the optical fiber preform 1P is completely perpendicular but also a case where the optical fiber preform 1P is deviated from completely perpendicular due to bending due to a manufacturing error, for example.

The light receiving unit 32 outputs information related to the position of the laser beam with which the light receiving surface 32s is irradiated to the measurement unit 34. The measurement unit 34 is configured to measure a refraction angle θ of the laser beam in the optical fiber preform 1P based on this information, measure a refractive index at a position through which the laser beam passes in the optical fiber preform 1P based on the refraction angle 8, and measure a refractive index profile from the refractive index. The measurement unit 34 includes, for example, an integrated circuit such as a microcontroller, an integrated circuit (IC), a large-scale integrated circuit (LSI), or an application specific integrated circuit (ASIC), and a numerical control (NC) device.

In the present embodiment, the refractive distribution of the optical fiber preform 1P is measured using the preform analyzer 30 described above. First, the optical fiber preform 1P is accommodated in the accommodation space of the accommodation unit 33 as described above. Next, the laser beam is emitted from the light emitting unit 31. Next, the optical fiber preform 1P and the light emitting unit 31 are relatively moved to the direction toward the center 1Pc of the optical fiber preform 1P or to the direction away from the center 1Pc so that the laser beam enters the optical fiber preform 1P from the direction perpendicular to the longitudinal direction of the optical fiber preform 1P, and the laser beam is scanned. In the present embodiment, the optical fiber preform 1P is moved with respect to the light emitting unit 31 by moving the accommodation unit 33. Then, the laser beam emitted from the optical fiber preform 1P is received by the light receiving unit 32. The light receiving unit 32 outputs information related to the position of the light applied to the light receiving surface 32s, and the measurement unit 34 measures the refraction angle θ of the laser beam in the optical fiber preform 1P based on the two-dimensional image, and measures the refractive index profile of the optical fiber preform 1P based on the refraction angle θ. That is, the preform analyzer 30 relatively moves the optical fiber preform 1P and the light emitting unit 31 to the direction toward the center 1Pc of the optical fiber preform 1P or to the direction away from the center 1Pc so that the laser beam enters the optical fiber preform 1P from the direction perpendicular to the longitudinal direction of the optical fiber preform 1P, scans with the laser beam, and measures the refractive index profile of the optical fiber preform 1P based on the refractive angle of the laser beam emitted from the optical fiber preform 1P.

As described above, the optical fiber preform 1P according to the present embodiment has the refractive index profile including the fluctuation region where the fluctuation 20 in which the refractive index increases and decreases is repeated. At least a part of this fluctuation region is included in the outer region OR in which the distance L from the center of the optical fiber preform 1P is equal to or greater than 7 mm, and the width of the fluctuation 20 in the radial direction in the outer region OR is less than 2 µm.

The present inventor has studied an optical fiber preform whose refractive index profile cannot be measured by a preform analyzer. As a result, it was found that as the distance from the center of the optical fiber preform is longer, it is more difficult to accurately measure the refraction angle of the laser beam, and as the distance is shorter, it is easier to accurately measure the refraction angle of the laser beam. In addition, it has been found that when the distance is long, it is easy to accurately measure the refraction angle of the laser beam if a width of fluctuation in which the refractive index increases or decreases is narrow. Therefore, as a result of further intensive studies, the present inventor has found that, in a case where the width of fluctuation in the radial direction in the outer region where the distance from the center of the optical fiber preform is equal to or greater than 7 mm in the refractive index profile is less than 2 µm, the refractive index profile can be measured by a preform analyzer. Therefore, according to the optical fiber preform 1P of the present embodiment, it is possible to prevent the preform analyzer from being incapable of measuring the refractive index profile.

In the optical fiber preform 1P of the present embodiment, the width 20W of the fluctuation 20 increases toward the center side. In the refractive index profile of the optical fiber preform obtained by sintering the porous glass body formed using the VAD method, the width 20W of the fluctuation 20 increases toward the center side. Therefore, the optical fiber preform 1P of the present embodiment is suitable for the optical fiber preform produced in this manner. The width 20W of the fluctuation 20 may be random or substantially constant in the radial direction.

The optical fiber preform 1P of the present embodiment is a preform drawn to obtain an optical fiber. Therefore, according to the optical fiber preform 1P of the present embodiment, for example, the conditions in drawing can be appropriately set based on the refractive index profile measured by the preform analyzer. The optical fiber preform 1P can also be used as a so-called intermediate preform for obtaining a preform having a diameter larger than that of the optical fiber preform 1P. By providing a glass layer on the outer peripheral surface of the optical fiber preform 1P as an intermediate preform, a preform having a diameter larger than that of the optical fiber preform 1P is obtained. For example, when the glass layer is made of the same glass body as the clad glass body 11P, a preform in which the outer diameter of the clad glass body 11P illustrated in FIG. 1 is increased is obtained. In this case, for example, the refractive index profile of the optical fiber preform 1P is measured by the preform analyzer, and the outer diameter of the glass layer can be set based on the refractive index profile. Therefore, it is possible to obtain a preform in which the ratio of the outer diameter of the core glass body 10P to the outer diameter of the clad glass body 11P is a desired ratio.

In addition, in the method for measuring the refractive index profile of the optical fiber preform of the present embodiment, the optical fiber preform 1P and the light emitting unit 31 that emits the laser beam are relatively moved to the direction toward the center 1Pc of the optical fiber preform 1P or to the direction away from the center 1Pc of the optical fiber preform 1P so that the laser beam enters the optical fiber preform 1P from the direction perpendicular to the longitudinal direction of the optical fiber preform 1P, and the laser beam is scanned, and the refractive index profile of the optical fiber preform 1P is measured based on the refractive angle of the laser beam emitted from the optical fiber preform 1P. The optical fiber preform 1P has a refractive index profile including a fluctuation region in which the fluctuation 20 in which the refractive index increases or decreases is repeated. At least a part of this fluctuation region is included in the outer region OR in which the distance L from the center of the optical fiber preform 1P is equal to or greater than 7 mm, and the width of the fluctuation 20 in the radial direction in the outer region OR is less than 2 µm. The diameter of the laser beam when entering the optical fiber preform 1P is equal to or greater than 20 µm and equal to or less than 40 µm. According to such a configuration, the refractive index profile of the optical fiber preform 1P can be measured.

Although the present invention has been described by taking the above-described embodiment as an example, the present invention is not limited thereto.

For example, in the above embodiment, the optical fiber preform 1P including the core glass body 10P and the clad glass body 11P has been described as an example. However, it is sufficient that the optical fiber preform 1P has the refractive index profile including the fluctuation region in which the fluctuation 20 of the refractive index is repeated, the fluctuation being repeating increase and decrease of the refractive index, wherein, and at least a part of the fluctuation region is included in the outer region OR located with the distance L of equal to or greater than 7 mm from the center of the optical fiber preform 1P, and the width 20W of the fluctuation 20 in the radial direction in the outer region OR is less than 2 µm. For example, the clad glass body 11P may include an inner glass layer surrounding the outer peripheral surface of the core glass body 10P and having a refractive index different from that of the core glass body 10P, and an outer glass layer surrounding the outer peripheral surface of the inner glass layer and having a refractive index different from that of the inner glass layer. When the optical fiber preform 1P is the above-described intermediate preform, for example, the optical fiber preform 1P may be the core glass body 10P.

In addition, in the above embodiment, the optical fiber preform 1P in which the fluctuation 20 of the refractive index is repeated over the entire optical fiber preform 1P in the radial direction and the entire refractive index profile is a fluctuation region has been described as an example. However, at least a part of the fluctuation region may be included in the outer region OR in which the distance L from the center of the optical fiber preform 1P is less than 7 mm. For example, the fluctuation 20 may not occur on the center side of the inner region IR in which the distance L is less than 7 mm. The optical fiber preform 1P is obtained, for example by, in the glass member formation step P1, forming a porous glass body by the OVD method using a glass rod in which the fluctuation 20 in the refractive index profile does not occur, and sintering the porous glass body to form a glass member.

In the above embodiment, the optical fiber preform 1P includes the rod-shaped core glass body 10P and the clad glass body 11P having a refractive index different from that of the core glass body 10P and surrounding the outer peripheral surface of the core glass body 10P. In the core glass body 10P, a part of the core glass body 10P is located in the outer region OR. However, as described above, the core glass body 10P may be located only in the inner region IR in which the distance from the center of the optical fiber preform 1P is less than 7 mm. According to such a configuration, an increase in the width of the fluctuation 20 in the core glass body 10P is allowed. Therefore, according to such a configuration, it is possible to realize the optical fiber preform 1P including the core glass body 10P having a high degree of freedom of the width 20W of the fluctuation 20.

Hereinafter, contents of the present invention will be described more specifically with reference to Examples and Comparative Examples, but the present invention is not limited thereto.

### (Example 1)

In this example, the optical fiber preform 1P illustrated in FIG. 1 was produced by the method for producing the optical fiber preform described in the above embodiment. Specifically, in the glass member formation step P1, a porous glass body was formed by the VAD method in which a rotation number of the glass rod, in other words, the rotational speed was set to 20 rpm, and the porous glass body was sintered to form a glass member. An outer diameter of this glass member was 100 mm. The glass member was stretched in the stretch step P2 to produce the optical fiber preform 1P. The stretch ratio of the glass member in the stretch step P2 was about 2.0, the outer diameter of the optical fiber preform 1P was 50 mm, and a radius of the core glass body 10P was 7.5 mm.

### (Example 2)

The optical fiber preform 1P was produced in the same manner as in Example 1 except that the stretch ratio of the glass member in the stretch step P2 was made larger than the stretch ratio in Example 1. The stretch ratio of the glass member in the stretch step P2 of this example was about 2.3, the outer diameter of the optical fiber preform 1P of this example was 43 mm, and the radius of the core glass body 10P was 6.5 mm. That is, the core glass body 10P of Example 2 was located only in the inner region IR.

### (Example 3)

The optical fiber preform 1P was produced in the same manner as in Example 1 except that the rotation number of the glass rod in the glass member formation step P1, in other words, the rotational speed was set to 40 rpm, and the stretch ratio of the glass member in the stretch step P2 was made smaller than the stretch ratio in Example 1. The stretch ratio of the glass member in the stretch step P2 of this example was about 1.9, the outer diameter of the optical fiber preform 1P of this example was 53 mm, and the radius of the core glass body 10P was 8 mm.

### (Comparative Examples 1 to 3)

The optical fiber preform 1P was produced in the same manner as in Example 1 except that the stretch ratio of the glass member in the stretch step P2 was set to a value different from the stretch ratio in Example 1. In Comparative Example 1, the stretch ratio of the glass member in the stretch step P2 was about 1.6, the outer diameter of the optical fiber preform 1P was 63 mm, and the radius of the core glass body 10P was 9.5 mm. In Comparative Example 2, the stretch ratio of the glass member in the stretch step P2 was about 1.8, the outer diameter of the optical fiber preform 1P was 57 mm, and the radius of the core glass body 10P was 8.5 mm. In Comparative Example 3, the stretch ratio of the glass member in the stretch step P2 was about 1.9, the outer diameter of the optical fiber preform 1P was 53 mm, and the radius of the core glass body 10P was 8 mm.

### (Measurement of refractive index profile)

The refractive index profile of the optical fiber preform 1P obtained in each of Examples 1 to 3 and Comparative Examples 1 to 3 was measured by a preform analyzer 30 illustrated in FIG. 5. A peak wavelength of the power of the laser beam in the preform analyzer 30 was 632 nm, and the diameter of the laser beam when entering the optical fiber preform 1P was approximately 30 µm. Then, for Examples 1 to 3 and Comparative Examples 1 to 3, the relationship between the distance L from the center of the optical fiber preform 1P and the width 20W of the fluctuation 20 in the refractive index profile was examined based on detailed analysis and calculation. This relationship is obtained by changing the distance from the center of the optical fiber preform 1P by 0.5 mm, and a part of the result is shown in FIG. 6. Table 1 shows the rotational speed of the glass rod, the outer diameter of the optical fiber preform 1P, the radius of the core glass body 10P, the stretch ratio in the stretch step P2, the width 20W of the fluctuation 20 at the position where the distance L is 7 mm, whether the width 20W of the fluctuation 20 in the region where the distance L is equal to or greater than 7 mm is less than 2 µm, and whether the refraction angle of the laser beam emitted from the preform analyzer 30 could not be measured, in Examples 1 to 3 and Comparative Examples 1 to 3.

**Table 1**

| | Rotation al speed [rpm] | Outer diameter [mm] | Radius of core glass body [mm] | Stretch ratio | Width 20W at position where distance L is 7 mm [*µ*m] | Width 20W where distance L is equal to or greater than 7 mm | Whether measurement is possible or not |
|---|---|---|---|---|---|---|---|
| Example 1 | 20 | 50 | 7.5 | 2.0 | 1.8 | Less than 0.002 mm | Yes |
| Example 2 | 20 | 43 | 6.5 | 2.3 | 1.0 | Less than 0.002 mm | Yes |
| Example 3 | 40 | 53 | 8 | 1.9 | 1.9 | Less than 0.002 mm | Yes |
| Comparative example 1 | 20 | 63 | 9.5 | 1.6 | 6.5 | Equal to or greater than 0.002 mm | No |
| Comparative example 2 | 20 | 57 | 8.5 | 1.8 | 4.5 | Equal to or greater than 0.002 mm | No |
| Comparative example 3 | 20 | 53 | 8 | 1.9 | 3.2 | Equal to or greater than 0.002 mm | No |

As shown in FIG. 6, in Examples 1 to 3, the width 20W of the fluctuation 20 in the region where the distance L was equal to or greater than 7 mm and equal to or less than 9.5 mm was less than 2 µm. Although not shown in FIG. 6, in Examples 1 to 3, the width 20W in the region where the distance L exceeds 9.5 mm was also less than 2 µm. In Examples 1 to 3, the refractive index profile of the optical fiber preform 1P could be measured. In FIG. 6, a range in which the distance L is equal to or greater than 7 mm and the width 20W of the fluctuation 20 is equal to or greater than 2 µm is hatched with a plurality of dots.

In Comparative Example 1, the refraction angle of the laser beam emitted from the preform analyzer 30 could not be measured in the region where the distance L was equal to or greater than 7.0 mm and equal to or less than 9.0 mm. In Comparative Example 2, the refraction angle of the laser beam emitted from the preform analyzer 30 could not be measured in the region where the distance L was equal to or greater than 7.0 mm and equal to or less than 8.0 mm. In Comparative Example 3, the refraction angle of the laser beam emitted from the preform analyzer 30 could not be measured in the region where the distance L was equal to or greater than 7.0 mm and equal to or less than 7.5 mm. In Comparative Examples 1 to 3, the refractive index profile could not be accurately measured. Although not shown in FIG. 6, in Comparative Examples 1 to 3, the width 20W of the fluctuation 20 in the region where the distance L exceeds 9.5 mm was less than 2 µm. As described above, in the refractive index profile of the optical fiber preform obtained by sintering the porous glass body formed using the VAD method, the width 20W of the fluctuation 20 increases toward the center side. In Comparative Examples 1 to 3, the width 20W in the region where the distance L was less than 7.0 mm exceeded 2 µm. In addition, from the results in FIG. 6, it can be seen that in Examples 1 to 3, the width 20W decreases at a substantially constant rate from the center toward the outside, and the rate of decrease in the width 20W decreases in the region outside the distance L at which the width 20W is substantially 1 µm. Therefore, also in Comparative Examples 1 to 3, it is considered that the width 20W decreases from the center toward the outside as in Examples 1 to 3, and it is considered that the width 20W in the region where the refraction angle of the laser beam cannot be measured in Comparative Examples 1 to 3 is equal to or greater than 2 µm.

Therefore, it was found that when the width 20W in the entire region of the region where the distance L is equal to or greater than 7 mm is less than 2 µm, the refractive index profile can be measured by the preform analyzer 30. In addition, it has been found that the width 20W at the position where the distance L is 7 mm may be equal to or greater than 1.8 µm and less than 2.0 µm.

The refractive index profile was measured by changing the laser beam of the preform analyzer 30 to a laser beam having a power peak wavelength of 405 nm, and the relationship between the distance L and the width 20W was similar to the results shown in FIG. 6 and Table 1. Therefore, it is considered that the wavelength of the laser beam of the preform analyzer 30 does not significantly affect whether or not the refractive index profile can be measured. In addition, the laser beam of the preform analyzer 30 was changed to white light emitted from a light emitting diode (LED), and the refractive index profile was measured. In this case, the degree of diffusion of the light emitted from the optical fiber preform was larger than that in the case where the light was laser beam, but the refraction angle of the light could be measured, and the relationship between the distance L and the width 20W was similar to the results shown in FIG. 6 and Table 1. Therefore, it is considered that the diameter of light incident on the optical fiber preform does not significantly affect whether or not the refractive index profile can be measured. In addition, the relationship between the distance L and the width 20W was the same as the results shown in FIG. 6 and Table 1 even when the refractive index profile was measured so that the diameter of the laser beam when entering the optical fiber preform 1P was 20 µm and the refractive index profile was measured so that the diameter was 40 µm. Therefore, when the diameter is equal to or greater than 20 µm and equal to or less than 40 µm, similarly to 30 µm, it is considered that it is possible to measure the refractive index profile of the optical fiber preform 1P in which the width 20W is less than 2 µm in the region where the distance L is equal to or greater than 7 mm.

As described above, according to the present invention, an optical fiber preform which is capable of preventing a preform analyzer from being incapable of measuring a refractive index profile, a method of measuring a refractive index profile of the optical fiber preform, and a method for producing the optical fiber preform are provided, and are expected to be used in the fields of optical fiber communication and the like.

## Claims

1. An optical fiber preform having a refractive index profile including a fluctuation region in which a fluctuation of a refractive index is repeated, the fluctuation being repeating increase and decrease of the refractive index, wherein
at least a part of the fluctuation region is included in an outer region located with a distance of equal to or greater than 7 mm from a center of the optical fiber preform, and
a width of the fluctuation in a radial direction in the outer region is less than 2 µm.

2. The optical fiber preform according to claim 1, wherein
the width of the fluctuation in the radial direction in the outer region as a whole is less than 2 µm.

3. The optical fiber preform according to claim 1 or 2, wherein
the width of the fluctuation increases toward the center.

4. The optical fiber preform according to any one of claims 1 to 3, wherein
an inner region located with a distance of less than 7 mm from the center includes a region where the width of the fluctuation is equal to or greater than 2 µm.

5. The optical fiber preform according to any one of claims 1 to 4, comprising:
a core glass body having a rod shape; and a clad glass body surrounding an outer peripheral surface of the core glass body, the clad glass body having a refractive index different from a refractive index of the core glass body, wherein
the core glass body is located only in an inner region located with a distance of less than 7 mm from the center.

6. A method for measuring a refractive index profile of an optical fiber preform, the method comprising:
moving the optical fiber preform and a light emitting unit emitting a laser beam relatively in one of a direction toward a center of the optical fiber preform and a direction away from the center of the optical fiber preform such that the laser beam enters the optical fiber preform from a direction perpendicular to a longitudinal direction of the optical fiber preform; causing the laser beam to scan the optical fiber preform; and measuring a refractive index profile of the optical fiber preform based on a refractive angle of the laser beam emitted from the optical fiber preform, wherein
the optical fiber preform is the optical fiber preform according to any one of claims 1 to 5, and
a diameter of the laser beam when the laser beam enters the optical fiber preform is equal to or greater than 20 µm and equal to or less than 40 µm.

7. A method for producing an optical fiber preform, the method comprising:
a glass member formation step of forming a porous glass body by depositing glass fine particles in multiple layers on a glass rod rotating around an axis, sintering the porous glass body, and forming a rod-shaped glass member having a refractive index profile including a fluctuation region in which a fluctuation of a refractive index is repeated, the fluctuation being repeating increase and decrease of the refractive index; and
a stretch step of stretching the glass member, wherein
a rotational speed of the glass rod in the glass member formation step and a stretch ratio of the glass member in the stretch step are set such that at least a part of the fluctuation region in the refractive index profile of the glass member after the stretch step is included in an outer region located with a distance of equal to or greater than 7 mm from a center of the glass member, and a width of the fluctuation in a radial direction in the outer region is less than 2 µm.

8. The method for producing an optical fiber preform according to claim 7, wherein
the rotational speed of the glass rod is equal to or greater than 20 rpm and equal to or less than 40 rpm.

9. The method for producing an optical fiber preform according to claim 7 or 8, wherein
the stretch ratio is set such that the width of the fluctuation in a radial direction in the outer region as a whole is less than 2 µm.
